# EUROPÄISCHE PATENTSCHRIFT

(11) **EP 0 983 872 B1**
(45) Veröffentlichungstag und Bekanntmachung des Hinweises auf die Patenterteilung: **24.05.2006**
(21) Anmeldenummer: 99114497.3
(22) Anmeldetag: 23.07.1999
(51) Int. Cl.: B44C 1/17, B60C 13/00, B29C 37/00

(54) **Verfahren zum Herstellen eines Schlauches**
Method of manufacturing a hose
Procédé de fabrication d'un tuyau

(30) Priorität: 29.08.1998 DE 19839463
(43) Veröffentlichungstag der Anmeldung: 08.03.2000
(73) Patentinhaber: ContiTech Schlauch GmbH, 30165 Hannover (DE)
(72) Erfinder: Rossmann, Jörg, 34537 Bad Wildungen (DE); Emde, Willi, 34516 Vöhl-Basdorf (DE)
(74) Vertreter: Finger, Karsten

(56) Entgegenhaltungen:
- EP-A- 0 512 412
- EP-A- 0 685 675
- DE-A- 3 825 342
- GB-A- 942 148
- GB-A- 2 072 134
- US-A- 2 984 596

## Beschreibung

Die Erfindung betrifft ein Verfahren zum Herstellen eines Schlauches gemäß dem Oberbegriff des Patentanspruchs.

Solche Verfahren sind beispielsweise aus der DE-OS 38 25 342 bekannt. Sie bieten die Möglichkeit, Gummischläuche bereits bei der ihre gegenständliche Herstellung abschließenden Vulkanisation auf ihrer Außenfläche durch Transferdruck mit einer dekorativen oder informativen Musterung - z.B. Markenzeichen, Gebrauchssymbole, Werbehinweise, technische Daten u.ä. - zu versehen, und zwar in ein- oder mehrfarbiger Ausführung und in besonders abriebbeständiger Qualität.

Bisher wurden die Schläuche dabei zur Formhaltung während der Vulkanisation mit einer Ummantelung versehen, die durch wendeliges Umwickeln der zuvor mit den Musterungen belegten Schlauchrohlinge mittels textiler Gewebestreifen gebildet wurden. Diese Art der Ummantelung hatte zwangsläufig zur Folge, daß die Struktur der textilen Gewebestreifen bleibend in die Oberfläche des Schlauches eingeprägt wurde und die beabsichtigte dekorative oder informative Musterung störend überlagerte, indem sie deren Prägnanz und/oder ästhetische Wirkung beeinträchtigte.

Aus EP-A-0 512 412 ist es bekannt, den Schlauchrohling in einen sich in Längsrichtung erstreckenden Folienstreifen umfangsmäßig einzuschlagen. Der Folienstreifen trägt auf seiner der Schlauchoberfläche zugewandten Seite farbige, streifenartige Kennzeichnungen aus einer Farbsubstanz. Anschließend wird der Schlauchrohling in üblicher Weise mit einer formhaltenden Ummantelung, z.B. in Form eines wendelig gewickelten Gewebestreifens, versehen und in dieser vulkanisiert. Dann wird die Ummantelung entfernt und der Folienstreifen ohne die Farbsubstanz von der Schlauchoberfläche abgezogen.

Aus der US-A-2 984 596 ist eine vulkanisierbare Kennzeichnung eines Schlauches bekannt, die aus einem mehrschichtigen Label besteht, das von einer Vorratsrolle abgelängt und örtlich auf eine Stelle der Schlauchoberfläche gelegt und mit dem Schlauchrohling zusammenvulkanisiert wird. Die tragende Schicht des Labels wird dann abgezogen. Eine Schutzschicht und eine die Markierungen tragende Bindungsschicht sind fest mit der Schlauchoberfläche verbunden. Schutzschicht und Bindungsschicht sind durchsichtig, so daß die Markierungen sichtbar sind.

Aus der EP-A-0 685 675 ist ein Kunststoffschlauch mit einer Einfärbung an seiner Oberfläche, die durch Aufprägen einer Heißprägefolie erzeugt ist, bekannt. Der Kunststoffschlauch kann während des Heißprägevorganges zur Erzielung einer Druckstabilität innen mit einem Gasüberdruck beaufschlagt werden.

Der Erfindung liegt die Aufgabe zugrunde, ein gattungsgemäßes Verfahren aufzuzeigen, bei dem Schläuche - und zwar auch Schläuche großer Länge, wie z.B. Gartenschläuche mit Längen von beispielsweise 80 oder 100 m - mit im besagten Transferdruck aufgebrachten Oberflächenmustern so erzeugt werden, daß sie eine völlig glatte Oberfläche erhalten, so daß die Oberflächenmusterung bei der Vulkanisation konturenscharf und brilliant bleibt.

Diese Aufgabe wird erfindungsgemäß durch ein Verfahren der eingangs genannten Art gelöst, das die im kennzeichnenden Teil des Patentanspruchs angegebenen Merkmale aufweist.

Durch die erfindungsgemäße Verwendung eines ringsum geschlossenen glattwandigen Rohres als formhaltende Vulkanisationsummantelung entsteht im Zusammenwirken mit den anderen kennzeichnenden Merkmalen der vorliegenden Erfindung ein Schlauch mit völlig glatter Mantelfläche, wobei die aufgebrachten Oberflächenmusterungen ohne jegliche Störungen ihres visuellen Erscheinungsbildes ebenfalls völlig glattflächig in die Schlauchoberfläche einbezogen sind.

Erfindungsgemäβ wird -wie die beigefügte Prinzip-Zeichnung beispielhaft zeigt - als Ummantelung ein doppelwandiges Rohr verwendet, das aus einem Innenrohr 4 und einem dieses Innenrohr unter Freilassung eines Ringspaltes umgebenden Außenrohr 5 gebildet ist. Der Schlauchrohling 1, dessen Mantelfläche zuvor in an sich bekannter Weise vollständig oder partiell mit den auf Trägerfolien 3 aufgetragenen vulkanisierbaren Musterungen 2 belegt wurde, wird vollständig in das Innenrohr hineingezogen, und dann wird in seinem Innern mit einem flüssigen Druckmedium - insbesondere Wasser - ein Überdruck P erzeugt, und eventuell zwischen dem Schlauchrohling und dem Innenrohr 4 eingeschlossene Luftreste werden durch Saugstutzen 4.1 restlos abgepumpt. Anschließend wird in den Wandungszwischenraum der Rohre 4 und 5 durch Anschlußstutzen 5.1 ein Heizmedium - vorzugsweise Wasserdampf - eingeleitet, das durch Erhitzung des Innenrohres 4 die Vulkanisation und das Zusammenvulkanisieren der Schlauchwandung 1 und der Musterschicht 2 bewirkt, so daß diese miteinander zu einer Einheit verbunden werden.

Nach Beendigung des Vulkanisationsvorganges werden die Druck- und Heizmedien abgelassen. Der Schlauch wird aus dem Rohr herausgezogen, und die Trägerfolie wird abgezogen und kann gegebenenfalls einer Wiederverwendung zugeführt werden. Die auf die erfindungsgemäße Weise hergestellten Schläuche zeichnen sich durch eine völlig glatte Oberfläche aus, auf der die transferierten Musterungen einen konturenscharfen und brillianten Anblick bieten. Als besonderer Vorteil des erfindungsgemäßen Verfahrens ist zu werten, daß es die Realisierung dieser hohen Oberflächenqualität auch bei der Herstellung von Schläuchen großer Länge - also z.B. bei 80 oder 100 m langen Gartenschläuchen - ermöglicht.

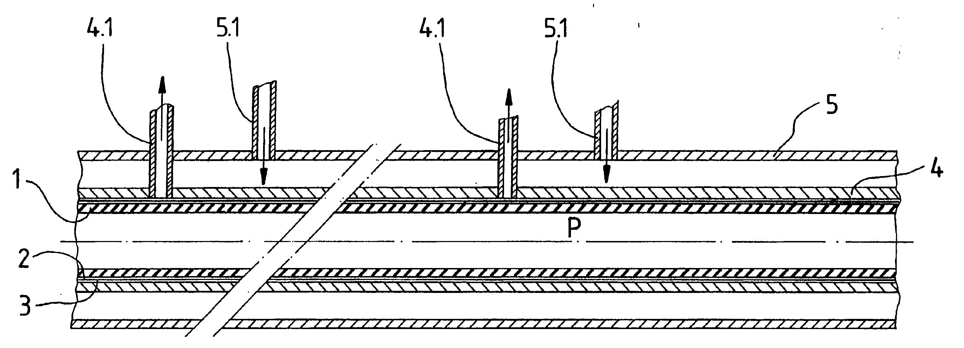

## Patentansprüche

1. Verfahren zum Herstellen eines Schlauches, der auf der Außenfläche seiner unter Verwendung von vulkanisierbaren Elastomeren und gegebenenfalls Verstärkungseinlagen gebildeten Wandung dekorative und/oder informative Musterungen (2) aufweist, wobei diese im Transferdruck aufgebracht werden, indem man sie spiegelbildlich als dünne vulkanisierbare Schicht auf die Rückseite einer Trägerfolie (3) aufbring und zusammen mit dieser auf die Außenfläche eines Schlauchrohlings (1) appliziert und dann den Schlauchrohling mit einer ihn umfassenden Ummantelung (4,5) versieht, ihn in dieser vulkanisert und mit den Musterungen zusammenvulkanisiert, dann die Ummantelung entfernt und schließlich die Trägerfolie abzieht,
**dadurch gekennzeichnet,**
**daß** man den Schlauchrohling (1) mit der auf seine Wandungsaußenfläche applizierten Musterschicht (2) und Trägerfolie (3) in eine Ummantelung in Form eines glattwandigen Rohres (4,5) einzieht, das doppelwandig ausgebildet ist, sowohl den Schlauchrohling(1) als auch das Rohr (4,5) an beiden Enden abdichtet, im Schlauchinnenraum durch ein fluides Druckmittel einen Überdruck (P) erzeugt, gegebenenfalls zwischen dem Schlauchrohling (1) und dem Rohr (4,5) eingeschlossene Luft absaugt und dann durch den Wandungszwischenraum des Rohres (4,5) ein heißes Fluid geleitet wird, so daß über die den Schlauchrohling (1) umschließende Rohrinnenwand (4) der Schlauchrohling (1) mit der Musterschicht (2) erhitzt und vulkanisiert wird und daß der Schlauch (1) schließlich aus dem Rohr (4,5) herausgezogen und die Trägerfolie (3) von ihm abgezogen wird.

## Claims

1. Method of manufacturing a hose, which has decorative and/or informative patterns (2) on the outer surface of its wall formed using vulcanizable elastomers and optionally reinforcing inserts, these patterns being applied by transfer printing, in that they are applied mirror-invertedly as a thin vulcanizable layer to the rear side of a carrier film (3) and applied together with the latter to the outer surface of a hose blank (1) , and then the hose blank is provided with a casing (4, 5) enclosing it, is vulcanized in the latter and vulcanized together with the patterns, then the casing is removed and finally the carrier film is pulled off,
**characterized in that**
the hose blank (1) with the pattern layer (2) and carrier film (3) applied to its outer wall surface is drawn into a casing in the form of a smooth-walled tube (4, 5), which is of a double-walled form, both the hose blank (1) and the tube (4, 5) are sealed at both ends, a positive pressure (P) is generated in the space inside the hose by a fluid pressure medium, any air trapped between the hose blank (1) and the tube (4, 5) is sucked out and then a hot fluid is passed through the space between the walls of the tube (4, 5), so that the hose blank (1) with the pattern layer (2) is heated via the inner tube wall (4) enclosing the hose blank (1) and is vulcanized and **in that** the hose (1) is finally withdrawn from the tube (4, 5) and the carrier film (3) is pulled off from it.

## Revendications

1. Procédé de fabrication d'un tuyau qui présente, sur la surface extérieure de sa paroi formée en utilisant des élastomères vulcanisables et éventuellement des inserts de renforcement, des motifs décoratifs et/ou informatifs (2), ceux-ci étant appliqués par impression par transfert en les appliquant sous forme inverse en miroir sous forme d'une couche mince vulcanisable sur le dos d'une feuille de support (3) et en les appliquant conjointement avec celle-ci sur la surface extérieure d'une ébauche de tuyau (1) puis en munissant l'ébauche de tuyau d'une enveloppe (4, 5) l'entourant, en la vulcanisant dans celle-ci et en la vulcanisant conjointement avec les motifs, puis en enlevant l'enveloppe et en retirant finalement la feuille de support,
**caractérisé en ce que**
l'on insère l'ébauche de tuyau (1) avec la couche de motif (2) appliquée sur sa surface extérieure de paroi et la feuille de support (3) dans une enveloppe en forme de tube à paroi mince (4, 5), qui est réalisé avec une paroi double, **en ce qu'**on rend étanche l'ébauche de tuyau (1) ainsi que le tube (4, 5) aux deux extrémités, que l'on produit à l'intérieur du tuyau, par un fluide sous pression, une surpression (P), éventuellement que l'on aspire l'air inclus entre l'ébauche de tuyau (1) et le tube (4, 5) puis que l'on fait passer un fluide chaud à travers l'espace intermédiaire de paroi du tube (4, 5) de sorte que l'ébauche de tuyau (1) avec la couche de motif (2) soient chauffées et vulcanisées par le biais de la paroi interne du tube (4) entourant l'ébauche de tuyau (1) et en ce le tuyau (1) est finalement retiré du tube (4, 5) et la feuille de support (3) est enlevée du tuyau.
